# EUROPÄISCHE PATENTSCHRIFT

(11) **EP 3 749 731 B1**
(45) Veröffentlichungstag und Bekanntmachung des Hinweises auf die Patenterteilung: **21.02.2024**
(21) Anmeldenummer: 19703039.8
(22) Anmeldetag: 30.01.2019
(51) Int. Cl.: C09K 5/14, C08K 3/10, H01M 10/653, H01M 10/66, H01M 50/24

(54) **THERMISCHES KONTAKT- UND FÜLLMATERIAL UND AKKUMULATOR-ANORDNUNG MIT EINEM THERMISCHEN KONTAKT- UND FÜLLMATERIAL**
THERMAL CONTACT AND FILLING MATERIAL, AND STORAGE BATTERY ASSEMBLY HAVING A THERMAL CONTACT AND FILLING MATERIAL
MATÉRIAU DE CONTACT ET DE CHARGE THERMIQUE ET SYSTÈME DE BATTERIE DOTÉ D'UN MATÉRIAU DE CONTACT ET DE CHARGE THERMIQUE

(30) Priorität: 09.02.2018 DE 102018102989
(43) Veröffentlichungstag der Anmeldung: 16.12.2020
(73) Patentinhaber: Polytec PT GmbH, 76307 Karlsbad (DE)
(72) Erfinder: MAURER, Arno, 9450 Altstätten (DE); STÖSSER, Benjamin, 68219 Mannheim (DE)
(74) Vertreter: LBP Lemcke, Brommer & Partner Patentanwälte mbB
(86) Internationale Anmeldenummer: PCT/EP2019/052263
(87) Internationale Veröffentlichungsnummer: WO 2019/154694

(56) Entgegenhaltungen:
- WO-A1-2012/013789
- DE-A1-102007 039 900
- DE-A1-102015 118 245
- DE-T5-112013 007 713
- US-A- 5 591 789

## Beschreibung

Im Betrieb von elektronischen und energietechnischen Systemen entsteht Wärme, die schnell und effektiv aus der Wärme erzeugenden Einheit abgeführt werden muss. Zur thermischen Kontaktierung der aktiven Komponenten mit den entsprechenden Wärmezu- oder -abführungen wird klassischerweise ein fester mechanischer Kontakt entweder durch Schrauben, Klammern oder stoffschlüssig mittels Löten oder Schweißen erzeugt. Das mechanische Fixieren hat zwar den Vorteil, dass die Verbindung wieder lösbar ist. Zwischen den aktiven Komponenten verläuft der Wärmeübergang jedoch nur über wenige Kontaktpunkte. Da sich dazwischen eine Luftschicht befindet, die ein sehr schlechter Wärmeleiter ist, wird die erzeugte Wärme nur unvollständig abgeführt. Um die Wärmeübertragung zu verbessern, werden daher thermisch leitfähige Materialien in die Fuge zwischen den aktiven Komponenten eingebracht, d.h. zwischen der wärmeerzeugenden und der wärmeableitenden Komponente.

Solche thermisch leitfähigen Materialien sind beispielsweise in Form von Wärmeleitpasten aus der Mikroelektronik bekannt und ermöglichen dort die Wärmeableitung aus Halbleiterchips. Derartige Wärmeleitpasten bestehen meist aus einem wärmeleitenden Füllstoff aus metallischen oder keramischen Partikeln, wie beispielsweise Aluminiumoxid, und einem silikonhaltigen Basisöl als Bindemittel.

Aus der DE 10 2015 118 245 A1 ist beispielsweise eine Wärmeleitpaste für elektronische Bauelemente bekannt, welche Aluminiumoxid als Füllstoff sowie ein silikonhaltiges Basisöl enthält.

US 5,591,789 A betrifft eine thermische Kontaktierung und Wärmeleitung zwischen einer wärmeerzeugenden und einer wärmeableitenden Komponente. Die Wärmepaste umfasst einen wärmeleitenden Füllstoff und ein silikonfreies Basisöl.

Das Dokument DE 11 2013 007 713 T5 offenbart ein aushartbares, thermisch leitfähiges Fett, das ein Metallhydroxid als wärmeleitenden Füllstoff enthält. Derartige Wärmeleitpasten erfüllen im Allgemeinen die in der Mikroelektronik gegebenen Anforderungen, indem sie in einfacher Weise in die Fuge zwischen den aktiven Komponenten eingebracht werden können und aufgrund ihrer pas-tösen Eigenschaft auch wieder entfernbar sind. Weiterhin können Sie auch in großvolumigen technischen Anwendungen, wie beispielsweise zur thermischen Kontaktierung in Wärmetauschern eingesetzt werden. Aufgrund ihrer pastösen Eigenschaft sind derartige Wärmeleitpasten jedoch wenig geeignet für Anwendungen, welche mechanischen Belastungen ausgesetzt sind. Durch mechanische Belastungen wie beispielsweise Schwingungen oder Bewegungen kann es zum Austreten der Wärmeleitpaste aus der Fuge zwischen den aktiven Komponenten kommen, sodass Luft in die Fuge eintritt. Derartige mechanische Belastungen spielen beispielsweise in Fahrzeugen eine wesentliche Rolle, weswegen bei der Kühlung von Fahrzeugbauteilen eine geeignete Betriebsfestigkeit der thermisch leitfähigen Materialien unter Stoß, Vibration und Schräglage wünschenswert ist. Die Bildung einer Luftschicht zwischen den aktiven Komponenten kann zu einer lokalen Überhitzung der wärmeableitenden Komponenten führen, wodurch deren Funktionalität eingeschränkt wird. Somit kann das Austreten der Wärmeleitpaste aus der Fuge einen Ausfall der wärmeerzeugenden Komponente verursachen.

Der vorliegenden Erfindung liegt daher die Aufgabe zugrunde, ein thermisches Kontakt- und Füllmaterial anzugeben, welches gegenüber den aus dem Stand der Technik bekannten Wärmleitpasten für großvolumige Anwendungen geeignet ist und insbesondere potentiellen mechanischen Belastungen besser standhält.

Diese Aufgabe wird erfindungsgemäß durch ein thermisches Kontakt- und Füllmaterial mit den Merkmalen des Anspruchs 1 und eine Akkumulator-Anordnung mit den Merkmalen des Anspruchs 14 gelöst. Vorteilhafte Weiterbildungen der erfindungsgemäßen Idee sind Gegenstand von Unteransprüchen.

Ein erfindungsgemäßes thermisches Kontakt- und Füllmaterial weist zumindest einen wärmeleitenden Füllstoff und zumindest ein silikonfreies Basisöl auf. Wesentlich hierbei ist, dass der wärmeleitende Füllstoff ein Metall-Hydroxid, insbesondere ein Aluminiumhydroxid ist und dass das thermische Kontakt- und Füllmaterial weiterhin zumindest ein chemisch vernetzbares Prepolymergemisch aufweist.

Das erfindungsgemäße thermische Kontakt- und Füllmaterial hat gegenüber den aus dem Stand der Technik bekannten Wärmeleitpasten den Vorteil, dass ein Metall-Hydroxid als wärmeleitender Füllstoff verwendet wird, welches typischerweise spezifisch leicht und kostengünstig ist. Es liegt dabei im Rahmen der Erfindung, dass es sich bei dem Metall-Hydroxid um Aluminiumhydroxid handelt, welches eine wesentlich geringere Dichte von nur 2,4 g/cm³ im Vergleich zur Dichte von 3,9 g/cm³ des häufig angewandten Aluminiumoxids aufweist. Eine geringere Dichte der verwendeten Komponenten des thermischen Kontakt- und Füllmaterials wirkt sich bevorzugt auf seine Anwendungsbreite aus. Vorzugsweise im Fall von großvolumigen Anwendungen ist eine geringere Dichte und die damit verbundene Verringerung des Gewichts des thermischen Kontakt- und Füllmaterials wünschenswert. Die Erfindung ist jedoch nicht hierauf beschränkt.

Weiterhin sind die verwendeten Metall-Hydroxide typischerweise im Vergleich zu den Metalloxiden deutlich weniger abrasiv, sodass nicht nur die aktiven Komponenten, sondern auch etwaige Bauteile von Dosieranlagen geschont werden, mit denen das erfindungsgemäße thermische Kontakt- und Füllmaterial verarbeitet wird. Hierdurch kann in vorteilhafter Weise ein vorzeitiger Materialverschleiß der aktiven Komponenten sowie der Dosieranlagen vermieden werden.

Ein weiterer Vorteil der Erfindung besteht darin, dass das erfindungsgemäße thermische Kontakt- und Füllmaterial ein silikonfreies Basisöl als Bindemittel enthält. Es ist allgemein bekannt, dass silikonhaltige Basisöle geringe Mengen an flüchtigen Silikonverbindungen enthalten, welche aus dem Basisöl in die Umgebungsluft abgegeben werden können. Diese flüchtigen Silikonverbindungen können auf Oberflächen, welche die aktiven Komponenten umgeben, abgelagert werden. Sofern auf diesen kontaminierten Oberflächen nachfolgend Lackier- oder Klebeprozesse durchgeführt werden sollen, besteht die Gefahr, dass die Haftung der Lack- oder Klebschichten verloren geht. Gelangen die flüchtigen Silikonverbindungen an elektrische Kontakte, werden sie durch Funkenbildung zersetzt und bilden isolierende Oxidschichten, wodurch die Funktion der Kontakte beeinträchtigt oder zerstört wird. Durch die Verwendung eines silikonfreien Basisöls kann daher in vorteilhafter Weise die Kontamination von umgebenden Oberflächen mit flüchtigen Silikonverbindungen vermieden werden. Weiterhin ermöglicht die Verwendung eines Bindemittels in Form eines silikonfreien Basisöls eine Einstellung der Viskosität und damit der Fließfähigkeit des thermischen Kontakt- und Füllmaterials auf einen gewünschten Wert. Hierdurch kann die Viskosität und die Fließfähigkeit des thermischen Kontakt- und Füllmaterials hinsichtlich der geplanten Anwendung eingestellt werden.

Die Anwesenheit eines chemisch vernetzbaren Prepolymergemisch ermöglicht in vorteilhafter Weise, dass das thermische Kontakt- und Füllmaterial nach seiner Verfüllung in eine Fuge zwischen zwei aktiven Komponenten durch chemische Vernetzung unter Ausbildung eines Polymers aushärten kann. Gegenüber den aus dem Stand der Technik bekannten pastösen wärmeleitenden Materialien wird dadurch vermieden, dass das thermische Kontakt- und Füllmaterial infolge von mechanischen Belastungen durch Schwingungen und Bewegungen aus der Fuge austritt und seine Lage verändert, wodurch erneut Luft in die Fuge zwischen den aktiven Komponenten der wärmeerzeugenden Bauteile eintreten kann. Dadurch werden lokale Überhitzungen der wärmeerzeugenden Komponente vermieden, wodurch letztlich die Lebensdauer dieser Bauteile deutlich verlängert wird.

Es liegt dabei im Rahmen der Erfindung, dass die chemische Vernetzung des Polymers vorzugsweise durch Wasser, insbesondere in Form von Luftfeuchtigkeit erfolgt. Die Erfindung ist jedoch nicht hierauf beschränkt.

Das beschriebene thermische Kontakt- und Füllmaterial kann vorzugsweise für solche Anwendungen in der Energie- und Elektrotechnik vorgesehen werden, bei denen größere Volumina oder Spalte thermisch leitend und potentiell reversibel verfüllt werden müssen. Vorrangig ist dies der Fall bei Antriebsbatterien für Elektrofahrzeuge, wo es um die dosierbare und reparierfähige thermische Kontaktierung von Li-lonenzellen oder Modulen geht. Darüber hinaus kann das thermische Kontakt- und Füllmaterial bevorzugt auch für weitere Anwendungen in der industriellen Heiz- und Kühltechnik, in der Elektrotechnik, Elektronik und im Maschinenbau verwendet werden. Diese Anwendungen sind beispielsweise die thermische Anbindung von Wärmerohren in Sonnenkollektoren und Wärmesammlern, die reversible thermische Kontaktierung in Wärmetauschern, Heiz- und Kühltischen, Peltierelementen, beheizten Pressformen und Extrudern, Prägegeräten, Heizbädern sowie die reversible wärmeleitende Einbettung bzw. Anbindung von Motoren, leitungselektronischen Komponenten, LED-Lampen, Sensoren und Thermofühlern.

In einer vorteilhaften Ausführungsform weist das chemisch vernetzbare Prepolymergemisch zumindest ein Prepolymer und zumindest einen Vernetzer auf. Dabei hat es sich als vorteilhaft erwiesen, wenn es sich bei dem Prepolymer vorzugsweise um einen Alkoxysilan-funktionalisierten Polyether handelt. Durch die Polymerisation eines Alkoxysilan-funktionalisierten Polyethers kann typischerweise ein festes und zugleich elastisches thermisches Kontakt- und Füllmaterial gebildet werden.

Die Verwendung eines Prepolymers und eines Vernetzers ermöglicht die Ausbildung eines dreidimensionalen polymeren Netzwerks und somit die Bildung einer elastischen, formbeständigen Masse. Dies führt zu einer noch deutlicheren Optimierung der Betriebsfestigkeit unter Stoß, Vibration, Schräglage und wechselnden Temperaturen der wärmeerzeugenden Komponenten. Es liegt dabei im Rahmen der Erfindung, dass der Anteil des Vernetzers im Verhältnis zum Prepolymer solcherart eingestellt werden kann, dass eine gewünschte Elastizität des thermischen Kontakt- und Füllmaterials nach Vernetzung erhalten bleibt, sodass das Material problemlos von den wärmeerzeugenden Komponenten wieder abgelöst und entfernt werden kann.

In einer weiteren vorteilhaften Ausführungsform des thermischen Kontakt- und Füllmaterials handelt es sich bei dem Vernetzer um ein organofunktionelles Silan. Als organofunktionelle Silane im Sinne der vorliegenden Verbindung werden hybride chemische Verbindungen angesehen, welche mit reaktiven organischen Gruppen versehene Silane darstellen, wodurch sie als Vernetzer, d.h. als "molekulare Brücke" zwischen Prepolymeren dienen können. Kommerziell erhältliche verfügbare Silane enthalten beispielsweise Amino-, Epoxy-, Glycidoxy-, Mercapto- und Sulfido-, Isocyanato-, Methacryloxy- und Vinylgruppen.

Es liegt dabei weiterhin im Rahmen der Erfindung, dass das organofunktionelle Silan ausgewählt sein kann aus der Gruppe Vinyltrimethoxysilan, 3-Aminopropyltrimethoxysilan, 3-Glycidyloxypropyltrimethoxysilan. Die Erfindung ist jedoch nicht hierauf beschränkt.

Um die Reaktionsgeschwindigkeit der Polymerisationsreaktion des Prepolymergemischs zu erhöhen, sieht eine weitere vorteilhafte Ausgestaltung vor, dass das thermische Kontakt- und Füllmaterial einen Polymerisationskatalysator aufweist. Die Anwesenheit eines Polymerisationskatalysators optimiert die Aushärtungsgeschwindigkeit des thermischen Kontakt- und Füllmaterials. Es liegt dabei im Rahmen der Erfindung, dass die Art des Polymerisationskatalysators in Abhängigkeit von der Zusammensetzung des Prepolymergemischs sowie der gewünschten Eigenschaften des vernetzten Endprodukts gewählt werden kann.

Da das thermische Kontakt- und Füllmaterial für eine automatische Prozessierbarkeit eine ausreichende Fließfähigkeit aufweisen muss, sieht eine weitere vorteilhafte Ausgestaltung des thermischen Kontakt- und Füllmaterials vor, dass der Anteil des wärmeleitenden Füllstoffs in dem thermischen Kontakt- und Füllmaterial im Bereich von 50 bis 90 Gewichtsprozent liegt. Untersuchungen des Anmelders hierzu haben ergeben, dass eine optimale Viskosität und somit Fließfähigkeit durch die Verwendung eines Anteils des wärmeleitenden Füllstoffs im Bereich von 50 bis 90 Gewichtsprozent im thermischen Kontakt- und Füllmaterial erreicht werden kann.

Weiterhin kann die Fließfähigkeit und die Viskosität des thermischen Kontakt- und Füllmaterials durch den Anteil des Basisöls beeinflusst werden. Daher liegt der Anteil des silikonfreien Basisöls in dem thermischen Kontakt- und Füllmaterial in einer weiteren vorteilhaften Ausgestaltung im Bereich von 5 bis 50 Gewichtsprozent.

Eine weitere vorteilhafte Ausgestaltung des thermischen Kontakt- und Füllmaterials sieht vor, dass der Anteil des chemisch vernetzbaren Prepolymergemischs in dem thermischen Kontakt- und Füllmaterial im Bereich von 1 bis 15 Gewichtsprozent liegt. Dabei führt ein geringerer Anteil des chemisch vernetzbaren Prepolymergemischs zu einer geringeren Härte und Standfestigkeit des thermischen Kontakt- und Füllmaterials im auspolymerisierten Zustand. Ein höherer Anteil des chemisch vernetzbaren Prepolymergemischs führt entsprechend zu einer höheren Härte und Standfestigkeit. Somit kann vom Verwender in einfacher Weise die gewünschten Eigenschaften des thermischen Kontakt- und Füllmaterials entsprechend der geplanten Anwendung gewählt werden.

Das silikonfreie Basisöl des thermischen Kontakt- und Füllmaterial ist vorzugsweise hochsiedend, insbesondere weist das silikonfreie Basisöl bevorzugt einen Dampfdruck von < 10⁻⁴ hPa bei einer Temperatur von 20 °C auf.

Das silikonfreie Basisöl des thermischen Kontakt- und Füllmaterial ist vorzugsweise ein Ester. Die Verwendung von Estern als Basisöl ist beispielsweise bei der Herstellung von Schmierstoffen allgemein bekannt. Diese können in synthetische Produkte und solche natürlichen Ursprungs wie beispielsweise Pflanzenöle oder tierische Fette unterteilt werden. Vorzugsweise handelt es sich bei dem für das thermische Kontakt- und Füllmaterial verwendeten Ester um einen hochsiedenden, synthetischen Ester, welcher sich durch eine hohe Oxidationsstabilität und geringe Verdampfungsneigung auszeichnet und daher auch bei erhöhten Temperaturen im Bereich von 50 °C bis 150 °C eingesetzt werden kann. Der Begriff "hochsiedender Ester" bezieht sich auf Ester mit einem Dampfdruck von < 10⁻⁴ hPa bei einer Temperatur von 20 °C.

Um eine optimale Vernetzungsgeschwindigkeit in Abhängigkeit von der geplanten Verwendung des thermischen Kontakt- und Füllmaterials zu erreichen, weist das thermische Kontakt- und Füllmaterial in einer weiteren vorteilhaften Ausgestaltung eine Härtungsgeschwindigkeit von 0,1 mm/Tag bis 10 mm/Tag, bevorzugt von 0,5 mm/Tag bis 7 mm/Tag, besonders bevorzugt von 1 mm/Tag bis 5 mm/Tag auf. Hierdurch kann das thermische Kontakt- und Füllmaterial ohne Zeitdruck in die Fuge zwischen die aktiven Komponenten eingebracht und gleichzeitig eine lange Aushärtungsdauer vermieden werden. Dies wirkt sich letztlich positiv auf die Prozessierbarkeit des thermischen Kontakt- und Füllmaterials aus.

Um eine optimale Fließfähigkeit des thermischen Kontakt- und Füllmaterials zu gewährleisten, sieht eine weitere vorteilhafte Ausgestaltung des thermischen Kontakt- und Füllmaterials vor, dass das thermische Kontakt- und Füllmaterial eine dynamische Viskosität im Bereich von 50 bis 500 Pa·s (gemessen mit einem Rotationsviskosimeter bei 40 °C) aufweist.

Es liegt hierbei im Rahmen der Erfindung, dass die Fließfähigkeit des thermischen Kontakt- und Füllmaterials durch den Zusatz von Rheologieadditiven auf einen gewünschten Wert eingestellt werden kann. Vorzugsweise können solche Rheologieadditive in dem thermischen Kontakt- und Füllmaterial im Bereich von 0,1 - 5 % Gewichtsprozent vorliegen und zu einer Erhöhung der Viskosität des thermischen Kontakt- und Füllmaterials dienen. Die Erfindung ist jedoch nicht hierauf beschränkt.

Weiterhin weist das thermische Kontakt- und Füllmaterial in einer weiteren vorteilhaften Ausgestaltung eine Wärmeleitfähigkeit im Bereich von 1 bis 5 W/m·K aufweist. Die Wärmeleitfähigkeit des thermischen Kontakt- und Füllmaterials ist dabei abhängig von seiner Zusammensetzung und kann durch eine geeignete Wahl der Komponenten entsprechend eingestellt werden. Dies ermöglicht, dass die Wärmeleitfähigkeit in Abhängigkeit von der Anwendung gewählt werden und gleichzeitig ein kostenoptimiertes Material hergestellt werden kann.

Eine weitere vorteilhafte Ausgestaltung des thermischen Kontakt- und Füllmaterials sieht vor, dass dieses eine spezifische Dichte im Bereich von 1,5 bis 2,5 g/cm³ aufweist.

Wie bereits zuvor erwähnt, zeichnet sich das erfindungsgemäße thermische Kontakt- und Füllmaterial dadurch aus, dass es ein silikonfreies Basisöl aufweist. Eine weitere vorteilhafte Ausgestaltung sieht vor, dass das thermische Kontakt- und Füllmaterial silikonfrei ist. Hierdurch wird gewährleistet, dass eine Kontamination der umgebenden Oberflächen durch flüchtige Silikonverbindungen aus dem Basisöl als auch aus anderen Komponenten des thermischen Kontakt- und Füllmaterials vermieden wird. Somit kann eine Beeinträchtigung der Funktionalität weiterer Bauteile in der Umgebung des wärmeerzeugenden Elements verhindert werden.

Ein anderer Aspekt der vorliegenden Erfindung sieht eine Akkumulator-Anordnung, insbesondere für ein Fahrzeug vor, welche zumindest einen Träger, zumindest ein Akkumulatorelement und mit zumindest eine Bodenplatte aufweist. Das Akkumulatorelement ist dabei auf dem Träger angeordnet, wobei der Träger auf der Bodenplatte angeordnet ist.

Akkumulator-Anordnungen wie beispielsweise der Lithium-Ionen-Akkumulator sind im Fahrzeugbau als Antriebsbatterien für Elektrofahrzeuge hinlänglich bekannt. Hierbei werden einzelne Lithium-Ionen-Zellen auf einem Träger befestigt, wobei zur Erhöhung der Akkuleistung des Lithium-Ionen-Akkumulators mehrere Träger mit Lithium-lonen-Zellen auf einer Bodenplatte befestigt werden. Um die in den Lithium-Ionen-Zellen entstehende Wärme effektiv abzuleiten, dienen sowohl der Träger als auch die Bodenplatte als wärmeableitende Elemente. Konventionelle Kühlungssysteme basieren auf einer Flüssigkeitskühlung oder auf den im Stand der Technik beschriebenen Wärmeleitpasten. Im Fall einer Flüssigkeitskühlung tritt das Problem auf, dass die Flüssigkeit nicht gleichmäßig in der Fuge zwischen den aktiven Komponenten fließt, wodurch keine gleichmäßige Wärmeableitung gewährleistet werden kann. Folglich kann es zu einer Fehlfunktion der Akkumulator-Anordnung kommen.

Bei der Verwendung von kommerziell erhältlichen Wärmeleitpasten treten die zuvor genannten Nachteile auf. Beispielsweise offenbart die WO 2012/013789 A1 eine Akkumulator-Anordnung mit mehreren miteinander verschalteten und parallel zueinander angeordneten Akkumulatorelementen, wobei die durch die Akkumulatorelemente erzeugte Wärme durch eine Wärmeleitpaste abgeleitet wird, welche ein silikonhaltiges Basisöl enthält. Wie bereits zuvor beschrieben, enthalten derartige silikonhaltige Basisöle geringe Mengen an flüchtigen Silikonverbindungen, welche aus dem Basisöl in die Umgebungsluft abgegeben werden können. Gelangen die flüchtigen Silikonverbindungen an elektrische Kontakte, werden sie durch Funkenbildung zersetzt und bilden isolierende Oxidschichten, wodurch die Funktion der Kontakte beeinträchtigt oder zerstört wird. Dies wirkt sich negativ auf die Lebensdauer der Akkumulator-Anordnung aus.

Um daher eine optimale Wärmeableitung zu ermöglichen und die Lebensdauer der Bauteile der Akkumulator-Anordnung zu erhöhen, sieht die erfindungsgemäße Akkumulator-Anordnung daher als wesentlichen Aspekt eine thermisch leitende Schicht vor, welche zumindest zwischen der Bodenplatte und dem Träger und/oder zwischen dem Akkumulatorelement und dem Träger angeordnet ist. Die thermisch leitende Schicht ist dabei aus einem thermischen Füll- und Kontaktmaterial nach einem der Ansprüche 1 bis 13 ausgebildet.

Um die Stabilität der Akkumulator-Anordnung im Betriebszustand zu optimieren, liegt es hierbei im Rahmen der Erfindung, dass die einzelnen Akkumulatorelemente auf dem Träger und/oder der Träger auf der Bodenplatte mechanisch fixiert sind. Hierdurch wird die benötigte Stoßfestigkeit der Akkumulator-Anordnung im Betriebszustand gewährleistet. Die Erfindung ist jedoch nicht hierauf beschränkt.

Im Laufe der Betriebsdauer der Akkumulator-Anordnung kann es zum Versagen eines oder mehrerer Akkumulator-Elemente kommen, wodurch die Leistung der Akkumulator-Anordnung sinkt. Daher müssen defekte Akkumulator-Elemente mit oder ohne deren Träger von der Bodenplatte entfernt und ausgetauscht werden. Um einen solchen Austausch in einfacher Weise zu ermöglichen, sieht eine erste vorteilhafte Ausgestaltung der Akkumulator-Anordnung vor, dass die thermisch leitende Schicht lösbar zwischen der Bodenplatte und dem Träger angeordnet ist. Dies ermöglicht, dass im Fall einer Korrektur, einer Reparatur oder eines Recyclings der Akkumulator-Anordnung das thermische Kontakt- und Füllmaterial unter Einsatz moderater Kräfte entfernt werden kann, wodurch der Träger und/oder die Bodenplatte wiederverwendbar sind.

Um fertigungsbedingte Toleranzen der Luftspalte von mehreren Millimetern zwischen den Akkumulatorelementen und dem Träger und/oder dem Träger und der Bodenplatte ausgleichen zu können, weist die thermisch leitende Schicht weiterhin vorzugsweise thixotrope Eigenschaften auf. Diese thixotropen Eigenschaften können bevorzugt durch eine geeignete Wahl der Zusammensetzung des thermischen Kontakt- und Füllmaterial erreicht werden. Beispielsweise kann eine thixotrope thermisch leitende Schicht bevorzugt durch den Anteil des Prepolymergemischs und/oder des Vernetzers und/oder des Basisöls in dem den thermischen Kontakt- und Füllmaterial ausgebildet werden. Die thixotropen Eigenschaften der thermisch leitenden Schicht können sich zudem in bevorzugter Weise positiv auf die Standfestigkeit der Schicht auswirken, wodurch die Lebensdauer der thermisch leitenden Schicht gesteigert und die Ausbildung einer schlecht wärmeleitenden Luftschicht verhindert wird.

Es liegt dabei im Rahmen der Erfindung, dass das thermische Kontakt- und Füllmaterial, aus welchem die thermisch leitende Schicht ausgebildet ist, weitere Zusätze wie beispielsweise Stabilisatoren in Form von Rheologie-Additiven enthalten. Die Zugabe solcher Zusätze ermöglicht die Einstellung der Viskosität der thermisch leitenden Schicht bzw. des thermischen Kontakt- und Füllmaterials und beeinflusst vorzugsweise auch die Standfestigkeit der thermisch leitenden Schicht.

Eine vorteilhafte Ausgestaltung der Akkumulator-Anordnung besteht darin, dass die thermisch leitende Schicht eine Schichtdicke im Bereich von 0,1 mm bis 10 mm, bevorzugt von 0,5 mm bis 5 mm, besonders bevorzugt von 1 mm bis 3 mm aufweist. Somit kann die Schichtdicke optimal an die Größe der Fuge zwischen aktiven Komponenten angepasst werden.

Weitere vorteilhafte Eigenschaften der Erfindung ergeben sich aus der nachfolgenden Beschreibung von Ausführungsbeispielen anhand der Zeichnung. Dabei zeigen
- Figur 1: ein erstes Ausführungsbeispiel einer erfindungsgemäßen Akkumulator-Anordnung in perspektivischer, schematischer Darstellung;
- Figur 2: eine Detailansicht des Ausführungsbeispiels einer erfindungsgemäßen Akkumulator-Anordnung als Schnittdarstellung und
- Figur 3: eine Detailansicht eines zweiten Ausführungsbeispiels einer erfindungsgemäßen Akkumulator-Anordnung als Schnittdarstellung.

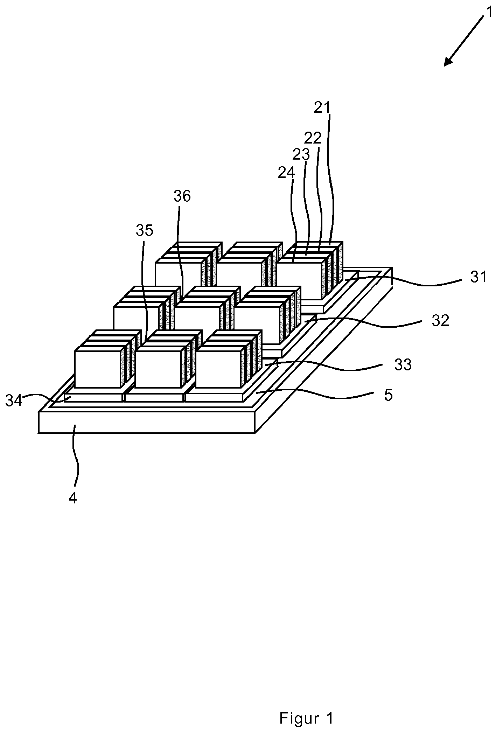

Figur 1 zeigt ein erstes Ausführungsbeispiel einer erfindungsgemäßen Akkumulator-Anordnung 1. Die Akkumulator-Anordnung 1 weist mehrere Akkumulatorelemente 21, 22, 23, 24, mehrere Träger 31, 32, 33, 34, 35, 36 sowie eine Bodenplatte 4 auf.

Im vorliegenden Ausführungsbeispiel sind vier Akkumulatorelemente 21, 22, 23, 24 auf einem Träger 31 aufgebracht und mit diesem verschraubt. Der Träger 31 ist als wärmeleitende Platte ausgebildet und seinerseits auf der Bodenplatte aufgebracht und mit dieser verschraubt. Hierdurch wird die Stabilität der Akkumulator-Anordnung 1 gegen Stöße oder Schieflage der Anordnung im Betrieb gewährleistet. Im vorliegenden Ausführungsbeispiel sind der Träger 31 sowie die Bodenplatte 4 aus Metall ausgebildet. Die Erfindung ist jedoch nicht hierauf beschränkt. Der Träger 31 und/oder die Bodenplatte 4 können auch aus anderen wärmeleitenden Materialien wie beispielsweise Graphit ausgebildet sein.

Die Akkumulatorelemente 21, 22, 23, 24 sind parallel in Reihe zueinander angeordnet und als Lithium-lonen-Zellen ausgebildet. Die Erfindung ist jedoch nicht hierauf beschränkt. Es liegt daher ebenfalls im Rahmen der Erfindung, dass andere Akkumulatortypen verwendet werden können. Weiterhin können die Akkumulatorelemente 21, 22, 23, 24 auch in einer anderen Orientierung zueinander auf dem Träger 31, 32, 33, 34, 35, 36 angeordnet werden.

Auf der Bodenplatte 4, welche ein wesentlich größeres Ausmaß im Vergleich zum Träger 31 aufweist, sind noch weitere fünf Träger 32, 33, 34, 35, 36 mit je vier parallel zueinander angeordneten Akkumulatorelementen aufgebracht und ebenfalls mit der Bodenplatte verschraubt. Zu besseren Übersichtlichkeit der Figur 1 wurde auf eine Nummerierung der weiteren Akkumulatorelemente verzichtet.

Es liegt weiterhin im Rahmen der Erfindung, dass die Anzahl der Träger 31, 32, 33, 34, 35, 36 und/oder die Anzahl der Akkumulatorelemente 21, 22, 23, 24 variieren kann.

Wie aus Figur 1 ersichtlich ist, befindet sich zwischen den Trägern 31, 32, 33, 34, 35, 36 und der Bodenplatte 4 eine thermisch leitende Schicht 5. Hierüber wird die von den Akkumulatorelementen 21, 22, 23, 24 erzeugte und an die Träger abgeführte Wärme an die Bodenplatte 4 abgeleitet. Es liegt hierbei im Rahmen der Erfindung, dass auch zwischen den Akkumulatorelementen 21, 22, 23, 24 und den Trägern 31, 32, 33, 34, 35, 36 eine thermisch leitende Schicht 5 eingebracht ist (in Figur 1 nicht sichtbar).

Die thermisch leitende Schicht 5 besteht im vorliegenden Ausführungsbeispiel aus einem erfindungsgemäßen thermischen Kontakt- und Füllmaterial, welches unter anderem Aluminiumhydroxid als Füllstoff und einen hochsiedenden synthetischen Ester als silikonfreies Basisöl enthält.

Wie aus Figur 1 weiterhin ersichtlich ist, ist die thermisch leitende Schicht 5 vollflächig zwischen den sechs Trägern 31, 32, 33, 34, 35, 36 und der Bodenplatte 4 aufgetragen. Weiterhin weist die Schicht eine Schichtdicke von 1 mm auf (nicht aus Figur 1 ersichtlich). Hierdurch wird im vorliegenden Ausführungsbeispiel eine optimale Wärmeabfuhr ermöglicht. Es liegt jedoch auch im Rahmen der Erfindung, dass die thermisch leitende Schicht 5 punktuell und/oder streifenartig zwischen den sechs Trägern 31, 32, 33, 34, 35, 36 und der Bodenplatte 4 mit einer Schichtdicke im Bereich von 0,1 bis 5 mm aufgebracht ist.

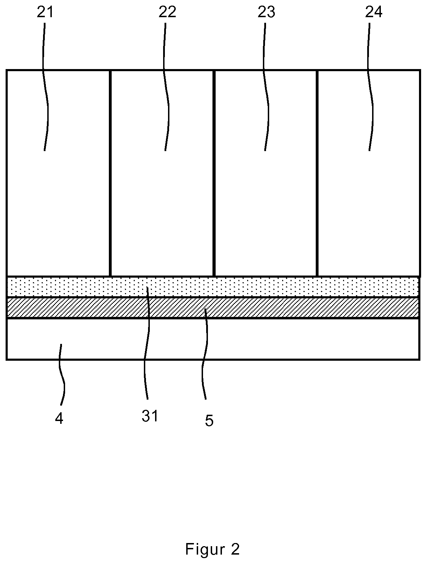

Figur 2 zeigt eine Detailansicht des bereits beschriebenen Ausführungsbeispiels einer erfindungsgemäßen Akkumulator-Anordnung 1 in einer Schnittdarstellung. Die Akkumulator-Anordnung 1 weist einen zu der in Figur 1 beschriebenen Ausgestaltung identischen Aufbau auf. Auch in diesem Fall sind vier Akkumulatorelemente 21, 22, 23, 24 auf einem Träger 31 aufgebracht und mit diesem verschraubt (Verschraubung nicht dargestellt). Der Träger 31 ist als wärmeleitende Platte ausgebildet und seinerseits auf der Bodenplatte 4 aufgebracht und mit dieser verschraubt (Verschraubung ebenfalls nicht dargestellt). Hierdurch wird die Stabilität der Akkumulator-Anordnung 1 gegen Stöße oder Schieflage der Anordnung im Betrieb gewährleistet.

Wie aus Figur 2 ersichtlich ist, befindet sich zwischen dem Träger 31 und der Bodenplatte 4 eine thermisch leitende Schicht 5. Hierüber wird die von den Ackumulatorelementen 21, 22, 23, 24 erzeugte und an die Träger abgeführte Wärme an die Bodenplatte 4 abgeleitet.

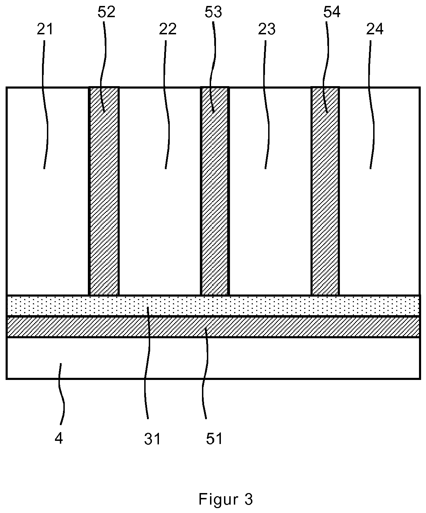

Figur 3 zeigt eine Detailansicht eines zweiten Ausführungsbeispiels einer erfindungsgemäßen Akkumulator-Anordnung 1 in einer Schnittdarstellung. Die Ackumulator-Anordnung 1 in Detailansicht weist einen zu der in Figur 2 beschriebenen Ausgestaltung identischen Aufbau auf, weshalb auf weitere Einzelheiten zunächst nicht einzugehen ist. Ein Unterschied zum zuvor beschriebenen Ausführungsbeispiel besteht darin, dass nicht nur zwischen dem Träger 31 und der Bodenplatte 4 eine thermisch leitende Schicht 51 ausgebildet ist. Vielmehr ist auch zwischen den einzelnen Akkumulatorelementen 21, 22, 23, 24 eine thermisch leitende Schicht 52, 53, 54 senkrecht zum Träger 31 eingebracht. Hierüber wird die von den einzelnen Akkumulatorelementen 21, 22, 23, 24 erzeugte Wärme über Konvektion gleichmäßig an die umgebenden Akkumulatorelemente 21, 22, 23, 24 verteilt, wodurch die Wärmeableitung an den Träger 31 sowie die Bodenplatte 4 optimiert ist. Es liegt hierbei im Rahmen der Erfindung, dass die thermisch leitende Schicht 52, 53, 54, welche senkrecht zum Träger 31 zwischen den einzelnen Akkumulatorelementen 21, 22, 23, 24 ausgebildet ist, als durchgängige Schicht oder nur punktuell eingebracht ist. Diese thermisch leitende Schicht 52, 53, 54 ist aus einem erfindungsgemäßen thermischen Kontakt- und Füllmaterial ausgebildet, vorliegend ist die Schicht gleich ausgebildet, wie die thermisch leitende Schicht 5.

## Patentansprüche

1. Thermisches Kontakt- und Füllmaterial mit zumindest einem wärmeleitenden Füllstoff und zumindest einem silikonfreien Basisöl,
**dadurch gekennzeichnet,**
**dass** der wärmeleitende Füllstoff ein Metall-Hydroxid, insbesondere Aluminiumhydroxid ist und dass das thermische Kontakt- und Füllmaterial weiterhin zumindest ein chemisch vernetzbares Prepolymergemisch aufweist.

2. Thermisches Kontakt- und Füllmaterial nach Anspruch 1,
**dadurch gekennzeichnet,**
**dass** das chemisch vernetzbare Prepolymergemisch zumindest ein Prepolymer und zumindest einen Vernetzer aufweist, welches Prepolymer vorzugsweise ein Alkoxy-funktionalisierter Polyether ist.

3. Thermisches Kontakt- und Füllmaterial nach Anspruch 2,
**dadurch gekennzeichnet,**
**dass** es sich bei dem Vernetzer um ein organofunktionelles Silan handelt, bevorzugt ausgewählt aus der Gruppe Vinyltrimethoxysilan, 3-Aminopropyltrimethoxysilan, 3-Glycidyloxypropyltrimethoxysilan.

4. Thermisches Kontakt- und Füllmaterial nach einem der Ansprüche 1 bis 3, **dadurch gekennzeichnet,**
**dass** das thermische Kontakt- und Füllmaterial weiterhin einen Polymerisationskatalysator aufweist.

5. Thermisches Kontakt- und Füllmaterial nach einem der Ansprüche 1 bis 4, **dadurch gekennzeichnet,**
**dass** der Anteil des wärmeleitenden Füllstoffs in dem thermischen Kontakt- und Füllmaterial im Bereich von 50 bis 90 Gewichtsprozent liegt.

6. Thermisches Kontakt- und Füllmaterial nach einem der Ansprüche 1 bis 5, **dadurch gekennzeichnet,**
**dass** der Anteil des silikonfreien Basisöls in dem thermischen Kontakt- und Füllmaterial im Bereich von 5 bis 50 Gewichtsprozent liegt.

7. Thermisches Kontakt- und Füllmaterial nach einem der Ansprüche 1 bis 6, **dadurch gekennzeichnet,**
**dass** der Anteil des chemisch vernetzbaren Prepolymergemischs in dem thermischen Kontakt- und Füllmaterial im Bereich von 1 bis 15 Gewichtsprozent liegt.

8. Thermisches Kontakt- und Füllmaterial nach einem der Ansprüche 1 bis 7, **dadurch gekennzeichnet,**
**dass** das silikonfreie Basisöl ein Ester, vorzugsweise ein hochsiedender synthetischer Ester ist.

9. Thermisches Kontakt- und Füllmaterial nach einem der Ansprüche 1 bis 7, **dadurch gekennzeichnet,**
**dass** das thermische Kontakt- und Füllmaterial eine Härtungsgeschwindigkeit von 0,1 mm/Tag bis 10 mm/Tag, bevorzugt von 0,5 mm/Tag bis 7 mm/Tag, besonders bevorzugt von 1 mm/Tag bis 5 mm/Tag aufweist.

10. Thermisches Kontakt- und Füllmaterial nach einem der Ansprüche 1 bis 8, **dadurch gekennzeichnet,**
**dass** das thermische Kontakt- und Füllmaterial eine dynamische Viskosität im Bereich von 50 bis 500 Pa·s aufweist.

11. Thermisches Kontakt- und Füllmaterial nach einem der Ansprüche 1 bis 9, **dadurch gekennzeichnet,**
**dass** das thermische Kontakt- und Füllmaterial eine Wärmeleitfähigkeit im Bereich von 1 bis 5 W/m·K aufweist.

12. Thermisches Kontakt- und Füllmaterial nach einem der Ansprüche 1 bis 11, **dadurch gekennzeichnet,**
**dass** das thermische Kontakt- und Füllmaterial eine spezifische Dichte im Bereich von 1,5 bis 2,5 g/cm³ aufweist.

13. Thermisches Kontakt- und Füllmaterial nach einem der Ansprüche 1 bis 12, **dadurch gekennzeichnet,**
**dass** das thermische Kontakt- und Füllmaterial silikonfrei ist.

14. Akkumulator-Anordnung (1), insbesondere für ein Fahrzeug, mit zumindest einem Träger (31, 32, 33, 34, 35, 36), zumindest einem Akkumulatorelement (21, 22, 23, 24), welches Akkumulatorelement (21, 22, 23, 24) auf dem Träger (31, 32, 33, 34, 35, 36) angeordnet ist, und mit zumindest einer Bodenplatte (4), wobei der Träger (31, 32, 33, 34, 35, 36) auf der Bodenplatte (4) angeordnet ist,
**dadurch gekennzeichnet,**
**dass** zumindest zwischen der Bodenplatte 4 und dem Träger (31, 32, 33, 34, 35, 36) und/oder zwischen dem Akkumulatorelement (21, 22, 23, 24) und dem Träger (31, 32, 33, 34, 35, 36) eine thermisch leitende Schicht (5) angeordnet ist, welche thermisch leitende Schicht (5) aus einem thermischen Füll- und Kontaktmaterial nach einem der Ansprüche 1 bis 13 ausgebildet ist.

15. Akkumulator-Anordnung (1) nach Anspruch 14,
**dadurch gekennzeichnet,**
**dass** die thermisch leitende Schicht (5) lösbar zwischen der Bodenplatte (4) und dem Träger (31, 32, 33, 34, 35, 36) und/oder zwischen dem Akkumulatorelement (21, 22, 23, 24) und dem Träger (31, 32, 33, 34, 35, 36) angeordnet ist und/oder thixotrope Eigenschaften aufweist.

16. Akkumulator-Anordnung (1) nach Anspruch 14 oder 15,
**dadurch gekennzeichnet,**
**dass** die thermisch leitende Schicht (5) eine Schichtdicke im Bereich von 0,1 mm bis 10 mm, bevorzugt von 0,5 mm bis 5 mm, besonders bevorzugt von 1 mm bis 3 mm aufweist.

## Claims

1. Thermal contact and filling material having at least one thermally conductive filler and at least one silicone-free base oil,
**characterised in that**
the thermally conductive filler is a metal hydroxide, especially aluminium hydroxide; and the thermal contact and filling material further comprises at least one chemically crosslinkable prepolymer mixture.

2. Thermal contact and filling material according to claim 1,
**characterised in that**
the chemically crosslinkable prepolymer mixture comprises at least one prepolymer and at least one crosslinker, which prepolymer is preferably an alkoxy-functionalised polyether.

3. Thermal contact and filling material according to claim 2,
**characterised in that**
the crosslinker is an organofunctional silane, preferably selected from the group vinyltrimethoxysilane, 3-aminopropyltrimethoxysilane, 3-glycidyloxy-propyltrimethoxysilane.

4. Thermal contact and filling material according to any one of claims 1 to 3, **characterised in that**
the thermal contact and filling material further comprises a polymerisation catalyst.

5. Thermal contact and filling material according to any one of claims 1 to 4, **characterised in that**
the proportion of the thermally conductive filler in the thermal contact and filling material is in the range of from 50 to 90 percent by weight.

6. Thermal contact and filling material according to any one of claims 1 to 5, **characterised in that**
the proportion of the silicone-free base oil in the thermal contact and filling material is in the range of from 5 to 50 percent by weight.

7. Thermal contact and filling material according to any one of claims 1 to 6, **characterised in that**
the proportion of the chemically crosslinkable prepolymer mixture in the thermal contact and filling material is in the range of from 1 to 15 percent by weight.

8. Thermal contact and filling material according to any one of claims 1 to 7, **characterised in that**
the silicone-free base oil is an ester, preferably a high-boiling synthetic ester.

9. Thermal contact and filling material according to any one of claims 1 to 7, **characterised in that**
the thermal contact and filling material has a curing rate of from 0.1 mm/day to 10 mm/day, preferably from 0.5 mm/day to 7 mm/day, especially preferably from 1 mm/day to 5 mm/day.

10. Thermal contact and filling material according to any one of claims 1 to 8, **characterised in that**
the thermal contact and filling material has a dynamic viscosity in the range of from 50 to 500 Pa s.

11. Thermal contact and filling material according to any one of claims 1 to 9, **characterised in that**
the thermal contact and filling material has a thermal conductivity in the range of from 1 to 5 W/m K.

12. Thermal contact and filling material according to any one of claims 1 to 11, **characterised in that**
the thermal contact and filling material has a specific density in the range of from 1.5 to 2.5 g/cm³.

13. Thermal contact and filling material according to any one of claims 1 to 12, **characterised in that**
the thermal contact and filling material is silicone-free.

14. Battery arrangement (1), especially for a vehicle, having at least one support (31, 32, 33, 34, 35, 36), at least one battery element (21, 22, 23, 24), which battery element (21, 22, 23, 24) is arranged on the support (31, 32, 33, 34, 35, 36), and having at least one base plate (4), the support (31, 32, 33, 34, 35, 36) being arranged on the base plate (4),
**characterised in that**
a thermally conductive layer (5) is arranged at least between the base plate (4) and the support (31, 32, 33, 34, 35, 36) and/or between the battery element (21, 22, 23, 24) and the support (31, 32, 33, 34, 35, 36), which thermally conductive layer (5) is formed from a thermal filling and contact material according to any one of claims 1 to 13.

15. Battery arrangement (1) according to claim 14,
**characterised in that**
the thermally conductive layer (5) is detachably arranged between the base plate (4) and the support (31, 32, 33, 34, 35, 36) and/or between the battery element (21, 22, 23, 24) and the support (31, 32, 33, 34, 35, 36) and/or has thixotropic properties.

16. Battery arrangement (1) according to claim 14 or 15,
**characterised in that**
the thermally conductive layer (5) has a layer thickness in the range of from 0.1 mm to 10 mm, preferably from 0.5 mm to 5 mm, especially preferably from 1 mm to 3 mm.

## Revendications

1. Matériau de contact et de charge thermique comprenant au moins une matière de charge thermoconductrice et au moins une huile de base sans silicone,
**caractérisé en ce que**
la matière de charge thermoconductrice est un hydroxyde métallique, en particulier un hydroxyde d'aluminium, et le matériau de contact et de charge thermique présente un mélange prépolymère pouvant être réticulé chimiquement.

2. Matériau de contact et de charge thermique selon la revendication 1,
**caractérisé en ce que**
le mélange prépolymère pouvant être réticulé chimiquement présente au moins un prépolymère et au moins un agent de réticulation, lequel prépolymère est de préférence un polyéther alcoxy fonctionnalisé.

3. Matériau de contact et de charge thermique selon la revendication 2,
**caractérisé en ce que**
l'agent de réticulation est un silane organofonctionnel, choisi de manière préférée parmi le groupe du vinyltriméthoxysilane, du 3-aminopropyltriméthoxysilane, du 3-glycidyloxypropyltriméthoxysilane.

4. Matériau de contact et de charge thermique selon l'une des revendications 1 à 3,
**caractérisé en ce que**
le matériau de contact et de charge thermique présente en outre un catalysateur de polymérisation.

5. Matériau de contact et de charge thermique selon l'une des revendications 1 à 4,
**caractérisé en ce que**
la proportion de la matière de charge thermoconductrice dans le matériau de contact et de charge thermique se situe dans la plage de 50 à 90 % en poids.

6. Matériau de contact et de charge thermique selon l'une des revendications 1 à 5,
**caractérisé en ce que**
la proportion de l'huile de base sans silicone dans le matériau de contact et de charge thermique se situe dans la plage de 5 à 50 % en poids.

7. Matériau de contact et de charge thermique selon l'une des revendications 1 à 6,
**caractérisé en ce que**
la proportion du mélange prépolymère pouvant être réticulé chimiquement dans le matériau de contact et de charge thermique se situe dans la plage de 1 à 15 % en poids.

8. Matériau de contact et de charge thermique selon l'une des revendications 1 à 7,
**caractérisé en ce que**
l'huile de base sans silicone est un ester, de préférence un ester synthétique à point d'ébullition élevé.

9. Matériau de contact et de charge thermique selon l'une des revendications 1 à 7,
**caractérisé en ce que**
le matériau de contact et de charge thermique présente une vitesse de durcissement de 0,1 mm/jour à 10 mm/jour, de manière préférée de 0,5 mm/jour à 7 mm/jour, de manière particulièrement préférée de 1 mm/jour à 5 mm/jour.

10. Matériau de contact et de charge thermique selon l'une des revendications 1 à 8,
**caractérisé en ce que**
le matériau de contact et de charge thermique présente une viscosité dans la plage de 50 à 500 Pa·s.

11. Matériau de contact et de charge thermique selon l'une des revendications 1 à 9,
**caractérisé en ce que**
le matériau de contact et de charge thermique présente une thermoconductivité dans la plage de 1 à 5 W/m·K.

12. Matériau de contact et de charge thermique selon l'une des revendications 1 à 11,
**caractérisé en ce que**
le matériau de contact et de charge thermique présente une densité spécifique dans la plage de 1,5 à 2,5 g/cm³.

13. Matériau de contact et de charge thermique selon l'une des revendications 1 à 12,
**caractérisé en ce que**
le matériau de contact et de charge thermique est sans silicone.

14. Arrangement de batterie (1), en particulier pour un véhicule, comprenant au moins un support (31, 32, 33, 34, 35, 36), au moins un élément de batterie (21, 22, 23, 24), lequel élément de batterie (21, 22, 23, 24) est disposé sur le support (31, 32, 33, 34, 35, 36), et comprenant au moins une plaque de fond (4), dans lequel le support (31, 32, 33, 34, 35, 36) est disposé sur la plaque de fond (4),
**caractérisé en ce que**
au moins entre la plaque de fond (4) et le support (31, 32, 33, 34, 35, 36) et/ou entre l'élément de batterie (21, 22, 23, 24) et le support (31, 32, 33, 34, 35, 36) est disposée une couche de conduction thermique (5), laquelle couche de conduction thermique (5) est réalisée à partir d'un matériau de charge et de contact thermique selon l'une des revendications 1 à 13.

15. Arrangement de batterie (1) selon la revendication 14,
**caractérisé en ce que**
la couche de conduction thermique (5) est disposée de manière amovible entre la plaque de fond (4) et le support (31, 32, 33, 34, 35, 36) et/ou entre l'élément de batterie (21, 22, 23, 24) et le support (31, 32, 33, 34, 35, 36) et/ou présente des propriétés thixotropes.

16. Arrangement de batterie (1) selon la revendication 14 ou 15,
**caractérisé en ce que**
la couche de conduction thermique (5) présente une épaisseur de couche dans la plage de 0,1 mm à 10 mm, de manière préférée de 0,5 mm à 5 mm, de manière particulièrement préférée de 1 mm à 3 mm.
